# EUROPEAN PATENT SPECIFICATION

(11) **EP 0 645 083 B1**
(45) Date of publication and mention of the grant of the patent: **03.02.1999**
(21) Application number: 94115199.5
(22) Date of filing: 27.09.1994
(51) Int. Cl.: A01N 43/50

(54) **Emulsifiable suspension concentrate compositions of imidazolinyl benzoic acids, esters and salts thereof, and dinitroaniline herbicides**
Emulgierbare Suspensionskonzentrate von Imidazolinylbenzoesäuren, deren Ester und deren Salze, und Dinitroanilin-Herbizide
Compositions concentrées de suspensions émulsionnables d'acides imidazolinyl benzoiques, leur esters et leurs sels et de dinitroanilines herbicides

(30) Priority: 28.09.1993 US 128443; 28.09.1993 US 128512
(43) Date of publication of application: 29.03.1995
(73) Proprietor: AMERICAN CYANAMID COMPANY, Wayne New Jersey 07470 (US)
(72) Inventor: Baker, Ivor Philip, Chandlers Ford, Hampshire SO5 1AQ (GB)
(74) Representative: Wächtershäuser, Günter, Prof. Dr.

(56) References cited:
- EP-A- 0 433 577
- EP-A- 0 496 989

## Description

Combination products containing imidazolinyl benzoic acids, or esters or salts thereof, such as imazamethabenz-methyl (an isomeric mixture of methyl 6-(4-isopropyl-4-methyl-5-oxo-2-imidazolin-2-yl)-m-toluate and methyl 2-(4-isopropyl-4-methyl-5-oxo-2-imidazolin-2-yl)-p-toluate), and dinitroaniline herbicides, such as pendimethalin (N-(1-ethylpropyl)-2,6-dinitro-3,4-xylidine), trifluralin (N,N-dipropyl-2,6-dinitro-4-trifluoromethylaniline) and the like, are effective herbicidal agents. However, it has been found that those combination products exhibit poor low temperature stability. Those products tend to thicken on storage at low temperatures and solid product remains in the container after use.

The present invention overcomes the drawbacks of the prior art by providing a herbicidal emulsifiable suspension concentrate composition which exhibits low temperature stability. Such stable compositions also have desirable flow characteristics.

It is an object of the present invention, therefore, to provide an emulsifiable suspension concentrate composition of imidazolinyl benzoic acids, or esters or salts thereof, and dinitroaniline herbicides, which is stable at low temperatures.

The present invention relates to a herbicidal emulsifiable suspension concentrate composition comprising either 5% to 20% by weight of a imdazolinyl benzoic acid, or ester or salt thereof, and 10% to 30% by weight of a dinitroaniline herbicide, either 2% to 10% by weight of an alkylarylsulfonate and 0.5% to 10% by weight of an antigelation agent or 0.5% to 10% by weight of a mixture of an alkylarylsulfonate and an alkylarylsulfonic acid, 5% to 15% by weight of a nonionic surfactant or mixture of nonionic surfactants, 1% to 10% by weight of a suspending agent, up to 1% by weight of an antifoaming agent, and an organic solvent or mixture of organic solvents.

It has been found that combinations of herbicidal imidazolinyl benzoic acids, or esters or salts thereof, and dinitroaniline emulsifiable suspension concentrate compositions thicken on storage at low temperatures and that large amounts of product are left in the container after the contents are poured out. Since those compositions may be used in areas where low
temperature prevails, emulsifiable suspension concentrate
compositions with low temperature stability are required. Surprisingly, it has now been discovered that the herbicidal emulsifiable suspension concentrate compositions of the present invention remain free-flowing at low temperatures and do not leave any significant amounts of product in the container after pouring.

The herbicidal emulsifiable suspension concentrate compositions of the present invention comprise 5% to 20% by weight imidazolinyl benzoic acids, or esters or salts thereof, such as imazamethabenz-methyl, 10% to 30% by weight of a dinitroaniline herbicide, such as pendimethalin or trifluralin, either 2% to 10% by weight of an alkylarylsulfonate and 0.5% to 10% by weight of an antigelation agent or 0.5% to 10% by weight of a mixture of an alkylarylsulfonate and an alkylarylsulfonic acid, 5% to 15% by weight of a nonionic surfactant or mixture of nonionic surfactants, 1% to 10% by weight of a suspending agent, up to 1% by weight of an antifoaming agent, and an aromatic solvent or mixture of aromatic solvents to total 100%.

Preferred herbicidal emulsifiable suspension concentrate compositions of the present invention are those comprising 10% to 15% by weight imidazolinyl benzoic acid, or ester or salt thereof, 15% to 25% by weight of a dinitroaniline herbicide, either 2% to 6% by weight of an alkylarylsulfonate and 1% to 5% by weight of an antigelation agent or 2% to 6% by weight of a mixture of an alkylarylsulfonate and an alkylarylsulfonic acid, 5% to 10% by weight of a polyoxyethylene phenyl ether, 0.5% to 2% by weight of a polyalkylene glycol ether, about 1% to 6% by weight of a clay, up to 1% by weight of an antifoaming agent, up to 2% by weight xylene, and an aromatic hydrocarbon solvent having a distillation range of from 135°C to 305°C.

Advantageously, it has been found that the compositions of the present invention which incorporate an antigelation agent, such as N-methylpyrrolidone, or an alkylarylsulfonate salt-alkylarylsulfonic acid component, provide physically and chemically stable herbicidal emulsifiable suspension concentrate compositions of imidazolinyl benzoic acids, or esters or salts thereof, and dinitroaniline herbicides which remain free-flowing and homogeneous at low temperatures. Such compositions also remain physically and chemically stable after repeated freezing and thawing cycles without precipitating insoluble solids.

Imidazolinyl benzoic acids, or esters and salts thereof, suitable for use in the compositions of the invention include those described in U. S. Patent No. 4,188,487. Imazamethabenz-methyl is preferred. Dinitroaniline herbicides suitable for use in the compositions of the present invention include those described in United States Patent No. 3,920,742. Preferred are pendimethalin, trifluralin, benfluralin, isopropalin, ethalfluralin, oryzalin and the like, with pendimethalin and trifluralin being most preferred.

Alkylarylsulfonates suitable for use in the compositions of the present invention include C₈-C₁₈alkylbenzenesulfonates, with calcium dodecylbenzenesulfonate being most preferred.

Antigelation agents that are suitable for use in the compositions of the present invention include polar solvents such as N-methylpyrrolidone and cyclohexanone, alcohols such as ethanol and methanol, glycols, such as propylene glycol and ethylene glycol, and the like, with N-methylpyrrolidone preferred. Most preferably, the antigelation agent is present in an amount such that its ratio to the imidazolinyl benzoic acid, or ester or salt thereof, is 0.05:1 to 0.5:1 to ensure that the compositions remain free-flowing at low temperatures.

The mixture of an alkylarylsulfonate and an alkylarylsulfonic acid is most preferably present in an amount such that its ratio to the imidazolinyl benzoic acid, or ester or salt thereof, is 0.1:1 to 0.6:1 to ensure that the compositions remain free-flowing at low temperatures. Further, the ratio of the alkylarylsulfonate to the alkylarylsulfonic acid is preferably 0.1:1 to 8:1, more preferably 0.3:1 to 3:1. Alkylaryl-sulfonates suitable for use in the compositions of the present invention include C₈-C₁₈ alkylbenzenesulfonates, with calcium dodecylbenzene-sulfonate being most preferred. Alkylarylsulfonic acids suitable for use in the compositions of the invention include C₈-C₁₈alkylbenzenesulfonic acids, with dodecylbenzenesulfonic acid being most preferred.

Nonionic surfactants suitable for use in the compositions of the present invention include polyalkylene glycol ethers such as butoxypolypropylenoxy polyethyl-enoxyethanol and the like, and polyoxyethylene phenyl ethers such as polyoxyethylene nonylphenyl ethers, polyoxyethylene dinonylphenyl ethers, polyoxyethylene dodecylphenyl ethers, polyoxyethylene octylphenyl ethers, polyoxyethylene tridecylphenyl ethers and the like, with polyoxyethylene nonylphenyl ethers with about 11 moles of ethylene oxide per molecule being preferred.

Suspending agents suitable for use in the compositions of the present invention include clays such as attapulgite clays, montmorillonite clays, kaolin clays, zeolite, silicas and the like, with attapulgite clays being most preferred.

Organic solvents suitable for use in the compositions of this invention include aromatic hydrocarbon solvents such as toluene, xylenes, polynuclear aromatic hydrocarbons such as naphthalenes and alkylnaphthalenes and mixtures thereof, many of which are available from the fractionation of crude oil and in general have distillation ranges in the temperature range of from 135°C to 305°C, with those having a distillation range of from 183°C to 290°C being most preferred, and are commercially available under a variety of tradenames.

The herbicidal emulsifiable suspension concentrate compositions of the present invention may conveniently be prepared by admixing a dinitroaniline herbicide with a mixture of the desired alkylarylsulfonate, nonionic surfactant or mixture of nonionic surfactants, anti-foaming agent and aromatic solvent or mixture of aromatic solvents and the antigelation agent(s) until a homogeneous mixture is obtained, then imazamethabenz-methyl, or other imidazolinyl benzoic acids, or esters or salts thereof, and the desired suspending agent are added to the homogeneous mixture and mixing is continued followed optionally by milling to obtain the desired herbicidal suspension concentrate composition of the present invention.

The following examples are provided to further illustrate the compositions of the present invention but are not intended to limit the invention described herein.

### EXAMPLES 1-10

### Preparation of emulsifiable suspension concentrate compositions

An aromatic hydrocarbon mixture (C₁₀-C₁₃) aromatics having a distillation range of from about 229 °C-284°C (SOLVESSO® 200, Exxon) (17,335 g, 49.5% on a weight basis), N-methylpyrrolidone (660 g, 1.9% on a weight basis), a nonylphenolethoxylate with an average 11 moles of ethylene oxide (ARKOPAL® N110, Hoechst) (2,630 g, 7.5% on a weight basis), calcium dodecylbenzene sulfonate (SOPROPHOR® 70, Rhone-Poulenc) (1.580 g, 60% in isobutanol, 4.5% on a weight basis), a silicone antifoam (SILOCOLAPSE® 431, ICI) (100 g, 0.3% on a weight basis), and a butoxy-polypropylenoxy polyethylenoxyethanol (TERGITOL® XD, Union Carbide) (330 g, 0.9% on a weight basis) a, 0.3% on a re stirred together to obtain a homogenous mixture. Molten pendimethalin (technical material, 91.8%, 7.160 g, 20.5% on a weight basis) is added to the homogenous mixture and stirring is continued. Imazamethabenzmethyl (technical material, 93.8%, 4,380 , 12.5% on a weight basis) and attapulgite clay (ATTAGEL® 50, Engelhard) (825 g, 2.4% on a weight basis) are added to the pendimethalin mixture and stirring is continued. The resultant mixture is stirred with a high-shear mixer and milled to obtain the desired emulsifiable suspension concentrate composition identified as example 1 in Table I.

Using essentially the same procedure, the emulsifiable suspension concentrate compositions identified as compositions 1-10 in Table I are obtained.

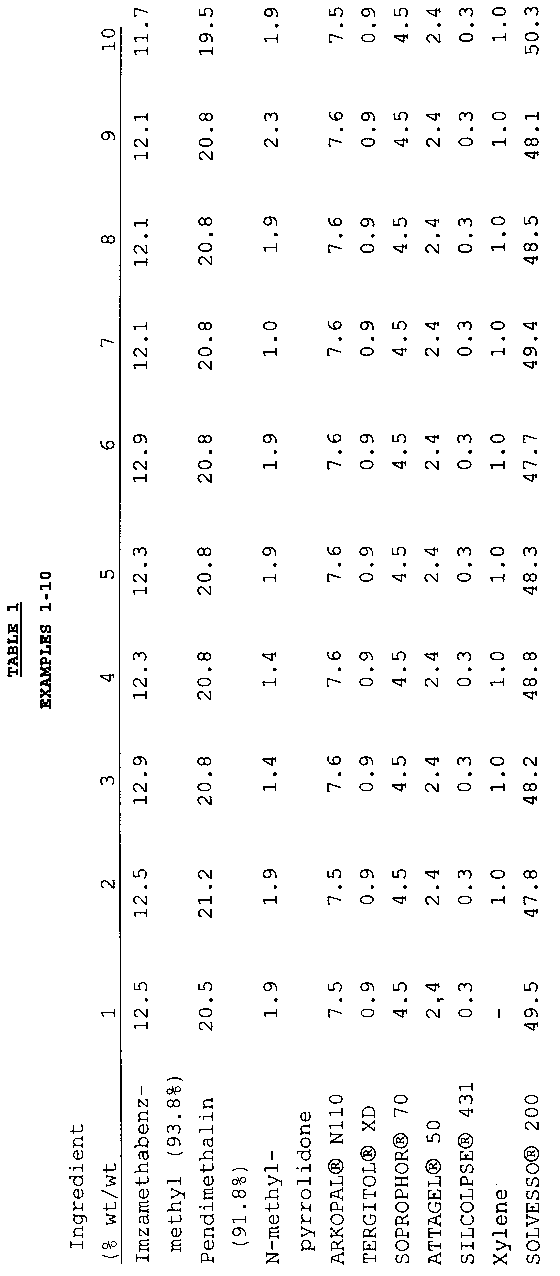

### EXAMPLE 11

### Preparation of emulsifiable suspension concentrate compositions

An aromatic hydrocarbon mixture (C₁₀-C₁₃) aromatics having a distillation range of from about 229 °C-284°C (SOLVESSO® 200, Exxon) (31.89 kg, 50.2% on a weight basis), xylene (0.64 kg, 1.0% on a weight basis), a nonylphenolethoxylate with an average 11 moles of ethylene oxide (ARKOPAL® N110, Hoechst) (4.80 kg, 7.5% on a weight basis), calcium dodecylbenzene sulfonate (SOPROPHOR® 70, Rhone-Poulenc) (1.27 kg, 60% in isobutanol, 2.0% on a weight basis), dodecylbenzenesulfonic acid (ARYLAN® SC Acid, Lankro Chemicals Ltd.) (1.27 kg, 2.0% on a weight basis), a butoxypolypropylenoxy polyethylenoxyethanol (TERGITOL® XD, Union Carbide) (0.60 kg, 0.9% on a weight basis) and a silicone antifoam (SILCOLAPSE® 431, ICI) (0.18 kg, 0.3% on a weight basis) are stirred together to obtain a homogenous mixture. Molten pendimethalin (technical material, 92.3%, 13.44 kg, 21.1% on a weight basis) is added to the homogenous mixture and stirring is continued. Imazamethabenz-methyl (technical material, 92.9%, 8.01 kg, 12.6% on a weight basis) and attapulgite clay (ATTAGEL® 50, Engelhard) (1.50 kg, 2.4% on a weight basis) are added to the pendimethalin mixture and stirring is continued. The resultant mixture is stirred with a high-shear mixer and milled to obtain the desired emulsifiable suspension concentrate composition identified as composition 11 in Table II.

Using essentially the same procedure, the emulsifiable suspension concentrate compositions identified as compositions 12-30 in Table II are obtained.

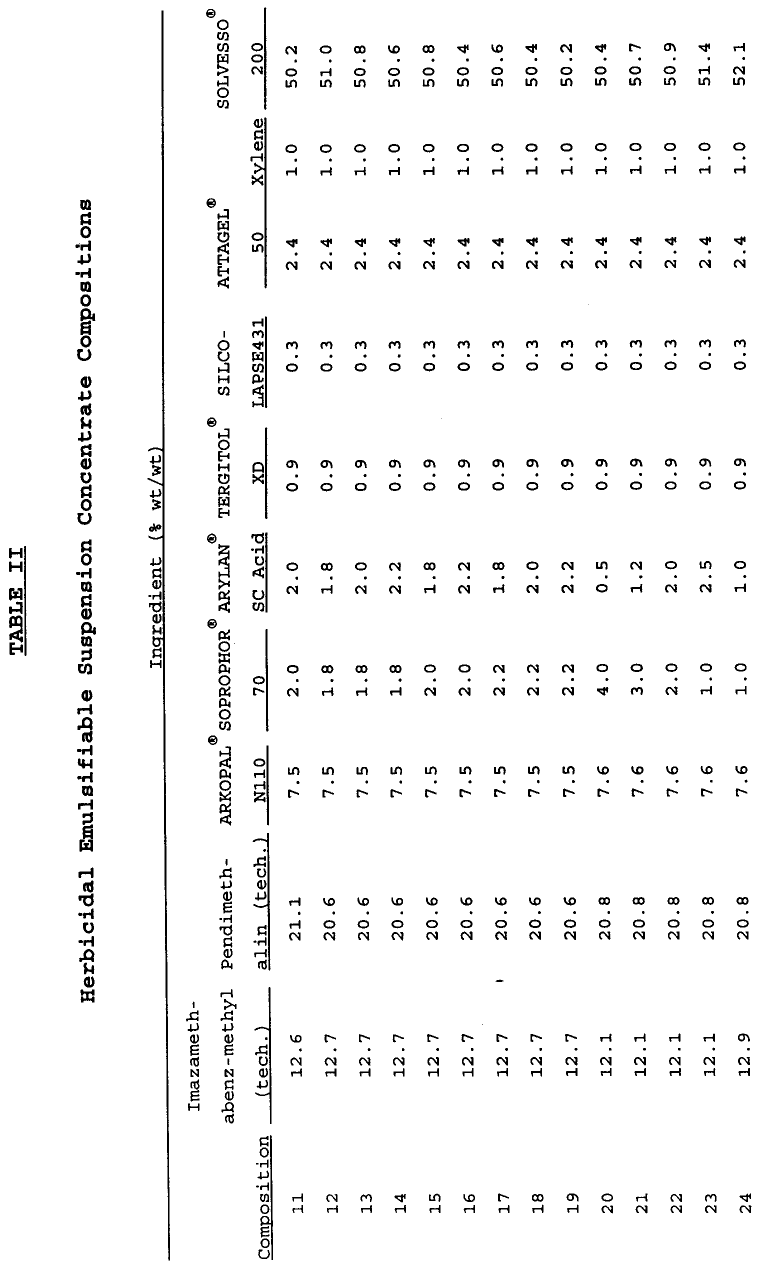

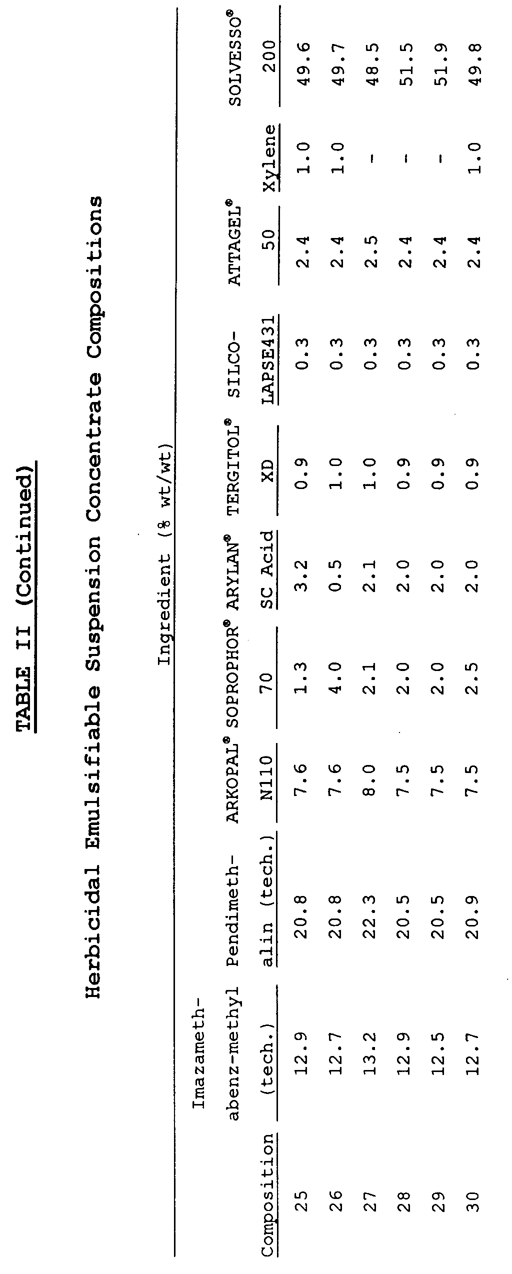

### EXAMPLE 31

### Low temperature stability of emulsifiable suspension concentrate compositions of the invention

Several samples of composition 11 from Example 11 and a comparative control composition containing on a weight basis 12.7% imazamethabenzmethyl (92.9% real), 20.4% pendimethalin (92.3% real), 7.6% ARKOPAL® N110, 4.5% SOPROPHOR® 70, 0.9% TERGITOL® XD, 0.3% SILCOLAPSE® 431, 2.4% ATTAGEL® 50 and 51.2% SOLVESSO® 200, prepared according to the procedure described in Example 11, are placed in plastic bottles and stored at 4°C. After 4, 8 and 12 weeks the samples are inspected for evidence of gel formation. The results of these experiments are summarized in Table III.

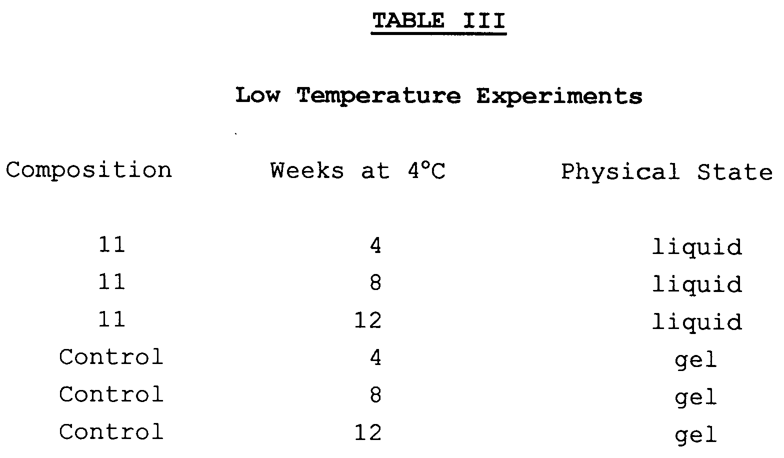

## Claims

1. A herbicidal emulsifiable suspension concentrate composition comprising 5% to 20% by weight of a imidazolinyl benzoic acid, or ester or salt thereof, 10% to 30% by weight of a dinitroaniline herbicide, 2% to 10% by weight of an alkylarylsulfonate, 0.5% to 10% by weight of an antigelation agent, 5% to 15% by weight of a nonionic surfactant or mixture of nonionic surfactants, 1% to 10% by weight of a suspending agent, up to 1% by weight of an antifoaming agent, and an aromatic solvent or mixture of aromatic solvents.

2. The composition according to claim 1 which comprises 10% to 15% by weight imazamethabenz-methyl, 15% to 25% by weight of a dinitroaniline herbicide, 2% to 6% by weight of an alkylarylsulfonate, 1% to 5% by weight of an antigelation agent, 5% to 10% by weight of a polyoxyethylene phenyl ether, 0.5% to 2% by weight of a polyalkylene glycol ether, 1% to 6% by weight of a clay, up to 1% by weight of an antifoaming agent, up to 2% by weight xylene, and an aromatic hydrocarbon solvent having a distillation range of from 135°C to 305°C, wherein the ratio of the antigelation agent to imazamethabenz-methyl is 0.1:1 to 0.3:1.

3. The composition according to claim 2 wherein the dinitroaniline herbicide is selected from the group consisting of pendimethalin, trifluralin, benfluralin, isopropalin, ethalfluralin and oryzalin.

4. The composition according to claim 1 wherein the alkylarylsulfonate is a C₈-C₁₈alkylbenzenesulfonate, the antigelation agent is N-methylpyrrolidone, the nonionic surfactant is a mixture of a polyoxyethylene phenyl ether and a polyalkylene glycol ether, and the suspending agent is a clay.

5. The composition according to claim 4 wherein the C₈-C₁₈alkylbenzenesulfonate is calcium dodecylbenzenesulfonate, the antigelation agent is N-methylpyrrolidone, the polyoxyethylene phenyl ether is a polyoxyethylene nonylphenyl ether with about 11 moles of ethylene oxide per molecule, the polyalkylene glycol ether is a butoxypolypropylenoxy polyethylenoxyethanol and the clay is an attapulgite clay.

6. A herbicidal emulsifiable suspension concentrate composition comprising 5% to 20% by weight of a imidazolinyl benzoic acid, or ester or salt thereof, 10% to 30% by weight of a dinitroaniline herbicide, 0.5% to 10% by weight of a mixture of an alkylarylsulfonate and an alkylarylsulfonic acid, 5% to 15% by weight of a nonionic surfactant or mixture of nonionic surfactants, 1% to 10% by weight of a suspending agent, up to 1% by weight of an antifoaming agent, and an aromatic solvent or mixture of aromatic solvents.

7. The composition according to claim 6 which comprises 10% to 15% by weight imazamethabenz-methyl, 15% to 25% by weight of a dinitroaniline herbicide, 2% to 6% by weight of a mixture of an alkylarylsulfonate and an alkylarylsulfonic acid, 5% to 10% by weight of a polyoxyethylene phenyl ether, 0.5% to 2% by weight of a polyalkylene glycol ether, 1% to 6% by weight of a clay, up to 1% by weight of an antifoaming agent, up to 2% by weight xylene, and an aromatic hydrocarbon solvent having a distillation range of from 135°C to 305°C, wherein the ratio of the alkylarylsulfonate to the alkylarylsulfonic acid is 0.1:1 to 8:1 and the ratio of the mixture of the alkylarylsulfonate and the alkylarylsulfonic acid to imazamethabenz-methyl is 0.1:1 to 0.6:1.

8. The composition according to claim 7 wherein the dinitroaniline herbicide is selected from the group consisting of pendimethalin, trifluralin, benfluralin, isopropalin, ethalfluralin and oryzalin.

9. The composition according to claim 6 wherein the alkylarylsulfonate is a C₈-C₁₈alkylbenzenesulfonate, the alkylarylsulfonic acid is a C₈-C₁₈ alkylbenzenesulfonic acid, the nonionic surfactant is a mixture of a polyoxyethylene phenyl ether and a polyalkylene glycol ether and the suspending agent is a clay.

10. The composition according to claim 9 wherein the C₈-C₁₈alkylbenzenesulfonate is calcium dodecylbenzenesulfonate, the C₈-C₁₈alkylbenzenesulfonic acid is dodecylbenzenesulfonic acid, the polyoxyethylene phenyl ether is a polyoxyethylene nonylphenyl ether with about 11 moles of ethylene oxide per molecule, the polyalkylene glycol ether is a butoxypolypropylenoxy polyethylenoxyethanol and the clay is an attapulgite clay.

## Patentansprüche

1. Herbizide emulgierbare Suspensionskonzentratzusammensetzung, umfassend 5 Gew.-% bis 20 Gew.-% einer Imidazolinylbenzoesäure, deren Ester oder Salz, 10 Gew.-% bis 30 Gew.-% eines Dinitroanilin-Herbizids, 2 Gew.-% bis 10 Gew.-% eines Alkylarylsulfonats, 0,5 Gew.-% bis 10 Gew.-% eines Anti-Gelbildungsmittels, 5 Gew.-% bis 15 Gew.-% eines nichtionischen Tensids oder Gemisches aus nichtionischen Tensiden, 1 Gew.-% bis 10 Gew.-% eines Suspendiermittels, bis zu 1 Gew.-% eines Antischaummittels, sowie ein aromatisches Lösungsmittel oder Gemisch aus aromatischen Lösungsmitteln.

2. Zusammensetzung nach Anspruch 1, die 10 Gew.-% bis 15 Gew.-% Imazamethabenzmethyl, 15 Gew.-% bis 25 Gew.-% eines Dinitroanilin-Herbizids, 2 Gew.-% bis 6 Gew.-% eines Alkylarylsulfonats, 1 Gew.-% bis 5 Gew.-% eines Anti-Gelbildungsmittels, 5 Gew.-% bis 10 Gew.-% eines Polyoxyethylenphenylethers, 0,5 Gew.-% bis 2 Gew.-% eines Polyalkylenglykolethers, 1 Gew.-% bis 6 Gew.-% eines Tons, bis zu 1 Gew.-% eines Antischaummittels, bis zu 2 Gew.-% Xylol, sowie ein aromatisches Kohlenwasserstofflösungsmittel, das einen Siedebereich von 135°C bis 305°C aufweist, umfaßt, wobei das Verhältnis des Anti-Gelbildungsmittels zu Imazamethabenzmethyl 0,1 : 1 bis 0,3 : 1 beträgt.

3. Zusammensetzung nach Anspruch 2, wobei das Dinitroanilin-Herbizid ausgewählt ist aus der Gruppe bestehend aus Pendimethalin, Trifluralin, Benfluralin, Isopropalin, Ethalfluralin und Oryzalin.

4. Zusammensetzung nach Anspruch 1, wobei das Alkylarylsulfonat ein C₈-C₁₈-Alkylbenzolsulfonat, das Anti-Gelbildungsmittel N-Methylpyrrolidon, das nichtionische Tensid ein Gemisch aus einem Polyoxyethylenphenylether und einem Polyalkylenglykolether, sowie das Suspendiermittel ein Ton ist.

5. Zusammensetzung nach Anspruch 4, wobei das C₈-C₁₈-Alkylbenzolsulfonat Calciumdodecylbenzolsulfonat, das Anti-Gelbildungsmittel N-Methylpyrrolidon, der Polyoxyethylenphenylether ein Polyoxyethylennonylphenylether mit etwa 11 Mol Ethylenoxid pro Molekül, der Polyalkylenglykolether ein Butoxypolypropylenoxypolyethylenoxyethanol, sowie der Ton ein Attapulgit-Ton ist.

6. Herbizide emulgierbare Suspensionskonzentratzusammensetzung, umfassend 5 Gew.-% bis 20 Gew.-% einer Imidazolinylbenzoesäure, deren Ester oder Salz, 10 Gew.-% bis 30 Gew.-% eines Dinitroanilin-Herbizids, 0,5 Gew.-% bis 10 Gew.-% eines Gemisches aus einem Alkylarylsulfonat und einer Alkylarylsulfonsäure, 5 Gew.-% bis 15 Gew.-% eines nichtionischen Tensids oder eines Gemisches aus nichtionischen Tensiden, 1 Gew.-% bis 10 Gew.-% eines Suspendiermittels, bis zu 1 Gew.-% eines Antischaummittels, sowie ein aromatisches Lösungsmittel oder Gemisch aus aromatischen Lösungsmitteln.

7. Zusammensetzung nach Anspruch 6, welche umfaßt 10 Gew.-% bis 15 Gew.-% Imazamethabenzmethyl, 15 Gew.-% bis 25 Gew.-% eines Dinitroanilin-Herbizids, 2 Gew.-% bis 6 Gew.-% eines Gemisches aus einem Alkylarylsulfonat und einer Alkyl-arylsulfonsäure, 5 Gew.-% bis 10 Gew.-% eines Polyoxyethylenphenylethers, 0,5 Gew.-% bis 2 Gew.-% eines Polyalkylenglykolethers, 1 Gew.-% bis 60 Gew.-% eines Tons, bis zu 1 Gew.-% eines Antischaummittels, bis zu 2 Gew.-% Xylol, sowie ein aromatisches Kohlenwasserstofflösungsmittel, das einen Siedebereich von 135°C bis 305°C aufweist, wobei das Verhältnis des Alkylarylsulfonats zu der Alkylarylsulfonsäure 0,1 : 1 bis 8 : 1 beträgt, und das Verhältnis des Gemisches aus dem Alkylarylsulfonat und der Alkylarylsulfonsäure zu Imazamethabenzmethyl 0,1 : 1 bis 0,6 : 1 beträgt.

8. Zusammensetzung nach Anspruch 7, wobei das Dinitroanilin-Herbizid ausgewählt ist aus der Gruppe, bestehend aus Pendimethalin, Trifluralin, Benfluralin, Isopropalin, Ethalfluralin und Oryzalin.

9. Zusammensetzung nach Anspruch 6, wobei das Alkylarylsulfonat ein C₈-C₁₈-Alkylbenzolsulfonat, die Alkylarylsulfonsäure einer C₈-C₁₈-Alkylbenzolsulfonsäure, das nichtionische Tensid ein Gemisch aus einem Polyoxyethylenphenylether und einem Polyalkylenglykolether und das Suspendiermittel ein Ton ist.

10. Zusammensetzung nach Anspruch 9, wobei das C₈-C₁₈-Alkylbenzolsulfonat Calciumdodecylbenzolsulfonat, die C₈-C₁₈-Alkylbenzolsulfonsäure Dodecylbenzolsulfonsäure, der Polyoxyethylenphenylether ein Polyoxyethylennonylphenylether mit 11 Mol Ethylenoxid pro Molekül, der Polyalkylenglykolether ein Butoxypolypropylenoxypolyethylenoxyethanol und der Ton ein Attapulgit-Ton ist.

## Revendications

1. Composition de concentré herbicide émulsionnable en suspension comprenant 5 % à 20 % en poids d'un acide imidazolinylbenzoïque ou ester ou sel de celui-ci, 10 % à 30 % en poids d'un herbicide du type dinitroaniline, 2 % à 10 % en poids d'un alkylarylsulfonate, 0,5 % à 10 % en poids d'un agent antigélifiant, 5 % à 15 % en poids d'un agent tensio-actif non ionique ou mélange d'agents tensio-actifs non ioniques, 1 % à 10 % en poids d'un agent suspensif, jusqu'à 1 % en poids d'un agent antimousse et un solvant aromatique ou mélange de solvants aromatiques.

2. Composition selon la revendication 1, qui comprend 10 % à 15 % en poids d'imazaméthabenz-méthyle, 15 % à 25 % en poids d'un herbicide du type dinitroaniline, 2 % à 6 % en poids d'un alkylarylsulfonate, 1 % à 5 % en poids d'un agent antigélifiant, 5 % à 10 % en poids d'un éther phénylique de polyoxyéthylène, 0,5 % à 2 % en poids d'un éther de polyalkylène-glycol, 1 % à 6 % en poids d'une argile, jusqu'à 1 % en poids d'un agent antimousse, jusqu'à 2 % en poids de xylène et un solvant hydrocarboné aromatique ayant un intervalle de distillation compris entre 135°C et 305°C, le rapport de l'agent antigélifiant à l'imazaméthabenz-méthyle étant de 0,1:1 à 0,3:1.

3. Composition selon la revendication 2, dans laquelle l'herbicide du type dinitroaniline est choisi dans le groupe formé par la pendiméthaline, la trifluraline, la benfluraline, l'isopropaline, l'éthalfluraline et l'oryzalin.

4. Composition selon la revendication 1, dans laquelle l'alkylarylsulfonate est un (alkyle en C₈-C₁₈)benzènesulfonate, l'agent antigélifiant est la N-méthylpyrrolidone, l'agent tensio-actif non ionique est un mélange d'un éther phénylique de polyoxyéthylène et d'un éther de polyalkylène-glycol, et l'agent suspensif est une argile.

5. Composition selon la revendication 4, dans laquelle le (alkyle en C₈-C₁₈)benzènesulfonate est le dodécylbenzènesulfonate de calcium, l'agent antigélifiant est la N-méthylpyrrolidone, l'éther phénylique de polyoxyéthylène est un éther nonylphénylique de polyoxyéthylène ayant environ 11 moles d'oxyde d'éthylène par molécule, l'éther de polyalkylène-glycol est un butoxypoly(propylèneoxy)poly(éthylène-oxy)éthanol et l'argile est une argile du type attapulgite.

6. Composition de concentré herbicide émulsionnable en suspension comprenant 5 % à 20 % en poids d'un acide imidazolinylbenzoïque ou ester ou sel de celui-ci, 10 % à 30 % en poids d'un herbicide du type dinitroaniline, 0,5 % à 10 % en poids d'un mélange d'un alkylarylsulfonate et d'un acide alkylarylsulfonique, 5 % à 15 % en poids d'un agent tensio-actif non ionique ou mélange d'agents tensio-actifs non ioniques, 1 % à 10 % en poids d'un agent suspensif, jusqu'à 1 % en poids d'un agent antimousse et un solvant aromatique ou mélange de solvants aromatiques.

7. Composition selon la revendication 6, qui comprend 10 % à 15 % en poids d'imazaméthabenz-méthyle, 15 % à 25 % en poids d'un herbicide du type dinitroaniline, 2 % à 6 % en poids d'un mélange d'un alkylarylsulfonate et d'un acide alkylarylsulfonique, 5 % à 10 % en poids d'un éther phénylique de polyoxyéthylène, 0,5 % à 2 % en poids d'un éther de polyalkylène-glycol, 1 % à 6 % en poids d'une argile, jusqu'à 1 % en poids d'un agent antimousse, jusqu'à 2 % en poids de xylène et un solvant hydrocarboné aromatique ayant un intervalle de distillation compris entre 135°C et 305°C, le rapport de l'alkylarylsulfonate à l'acide alkylarylsulfonique étant de 0,1:1 à 8:1 et le rapport du mélange de l'alkylarylsulfonate et de l'acide alkylarylsulfonique à l'imazaméthabenz-méthyle étant de 0,1:1 à 0,6:1.

8. Composition selon la revendication 7, dans laquelle l'herbicide du type dinicroaniline est choisi dans le groupe formé par la pendiméthaline, la trifluraline, la benfluraline, l'isopropaline, l'éthalfluraline et l'oryzalin.

9. Composition selon la revendication 6, dans laquelle l'alkylarylsulfonate est un (alkyle en C₈-C₁₈)benzènesulfonate, l'acide alkylarylsulfonique est un acide (alkyle en C₈-C₁₈)benzènesulfonique, l'agent tensio-actif non ionique est un mélange d'un éther phénylique de polyoxyéthylène et d'un éther de polyalkylène-glycol et l'agent suspensif est une argile.

10. Composition selon la revendication 9, dans laquelle le (alkyle en C₈-C₁₈)benzènesulfonate est le dodécylbenzènesulfonate de calcium, l'acide (alkyle en C₈-C₁₈)benzènesulfonique est l'acide dodécylbenzènesulfonique, l'éther phénylique de polyoxyéthylène est un éther nonylphénylique de polyoxyéthylène ayant environ 11 modes d'oxyde d'éthylène par molécule, l'éther de polyalkylène-glycol est un butoxypoly(propylène-oxy)poly(éthylène-oxy)éthanol et l'argile est une argile du type attapulgite.
